Europäisches Patentamt

(19) European Patent Office

Office européen des brevets

(11) Publication number: **0 243 431 B1**

(12) # EUROPEAN PATENT SPECIFICATION

(45) Date of publication of patent specification:
08.05.91 Bulletin 91/19

(51) Int. Cl.⁵: **E05F 15/00, E05F 15/10**

(21) Application number: **86906342.0**

(22) Date of filing: **24.10.86**

(86) International application number:
**PCT/FI86/00121**

(87) International publication number:
**WO 87/02739 07.05.87 Gazette 87/10**

(54) CLUTCHING DEVICE AND METHOD FOR CONTROLLING THE MOVEMENT OF THE SHAFT OF A HOISTING MACHINERY.

(30) Priority: **24.10.85 FI 854175**

(43) Date of publication of application:
**04.11.87 Bulletin 87/45**

(45) Publication of the grant of the patent:
**08.05.91 Bulletin 91/19**

(84) Designated Contracting States:
**DE GB SE**

(56) References cited:
**DE-A- 2 057 928**
**DE-A- 2 928 666**
**DE-C- 429 624**
**FR-A- 2 505 394**
**SE-A- 26 466**

(73) Proprietor: **OVITOR OY**
**Sienitie 24**
**SF-00770 Helsinki (FI)**

(72) Inventor: **SORSA, Seppo**
**Pyynikintie 1 A 27**
**SF-00710 Helsinki (FI)**

(74) Representative: **Schmitt, Hans, Dipl.-Ing. et al**
**Patentanwälte Dipl.-Ing H. Schmitt Dipl.-Ing.**
**W. Maucher Dreikönigstrasse 13**
**W-7800 Freiburg (DE)**

## Description

The invention relates to a clutching device for a hoisting machinery for doors or the like, said machinery having a primary shaft connected via a gearing to a driving motor, and a secondary shaft carrying a hoisting means, said clutching device including coupling means between said secondary shaft and said gearing, for disengaging said secondary shaft suitably for manual operation, said coupling means comprising first and second axially mutually movable clutch members, said second clutch member being movable in the direction of the secondary shaft against the force of a spring load, comprising at least one pair of opposite contact flank faces acting essentially perpendicularly to the shaft radius, said clutch members being normally forced by said spring load into mutually axial disposition with each pair of opposite contact flank faces of said second clutch member extending, respectively, into an interlocking engagement with corresponding pairs of opposite contact faces of respective notches in said first clutch member, thus transmitting power in both directions of rotation.

The invention relates also to a method for the controlling of the movement of the secondary shaft of a hoisting machinery or the like, wherein for the manual or the like operation the secondary shaft is disengaged from the driving motor with the aid of an essentially tapered-tooth claw clutch means, which is preferably movable in the direction of said secondary shaft in such a way that a second clutch member, e.g. a clutch disc mounted torsion resistibly on said secondary shaft is moved in the direction of said shaft. The invention further relates to the use of the partial displacement of a tapered-tooth clutch member in connection with hoisting machinery for the disengaging of the driving motor from the hoisting means in such a way that in the disengaged mode the relative rotation of the hoisting means is possible in one direction of rotation but is still prevented in the other direction of rotation, whereby in the normal operation mode the driving motor and the hoisting means are in immobile contact with each other.

The hoisting machinery for doors is generally composed of a driving motor coupled to the primary shaft of a gearing, such as for example a worm gear or the like, and of support means for the door or the like in power transmitting connection with the secondary shaft of said gearing. The driving machinery generally consists of an electromotor or the like and for the case of a disruption in the power distribution one should be able also to operate the door manually at least in such a way that the door always can be safely opened. In these situations the driving motor normally has to be rotated by hand which is generally an extremely slow process which moreover is very difficult to accomplish technically. Alternatively the secondary shaft has to be disengaged from the gearing and the manual operation can be performed directly at the secondary shaft or the door itself without, however, the machinery preventing the movement of the door. French patent application 2 505 394 shows an example of such a disengagement arrangement adapted for sliding doors.

In the normal operation mode the gearing, which is generally of a self-retaining type, supports the door or the like directly via the secondary shaft, whereby, especially in connection with lifting or bascule-doors, the weight of the door despite counter balancing generally causes a load acting on said gearing. In case the door at the moment of disengagement is for example in a hoisted position there exists, however, the risk that at the disengagement the door may crash down e.g. because of being out of balance. In sliding or other horizontally movable doors this problem does not occur, and hence e.g. said FR-application 2 505 394 does not show any integrated means for preventing a crash down. In hoisting mechanisms for lifting doors this has so far been prevented by complicated brake means or arresting devices controlling the movement of the door which forms the load at the moment when the secondary shaft is disengaged from the gearing. The object of the invention is to provide a simple clutch solution which in all situations enables the opening of the door in an emergency. It is also the object of the invention to provide a solution which prevents the door from freely crashing down, by maintaining the driving motor to support the door at all times.

According to the invention this is accomplished by a clutch connected to the hoisting machinery in the way disclosed in the appended claims. In the normal operation mode according to the characteristic features of the invention both contact flank faces, due to the mutual axial positions of the clutch members, extend into an interlocking engagement capable of transmitting power in opposite directions of rotation, said engagement being formed between said contact flank faces and the corresponding faces of at least one notch of in one of the opposite clutch members, whereby in the disconnected mode one of the contact flank faces of each flank pair still, preferably by spring force, aims at said interlocking engagement preventing the rotation in one direction while the other contact face of the notch meets a tapered or inclined front face enabling slipping in the opposite direction.

Preferably that particular clutch member, which is movable in the direction of the secondary shaft against a spring force, comprises at least one pair of opposite contact flank faces. Said opposite contact flank faces, being part of a clutch tooth, have, in each pair respectively, different extensions in the direction of said shaft, and are thereby joined by an inclined face. Said device further comprises displacement means for temporarily dislocating said mutually axial disposition in the direction of said shaft and against the force of said spring load, the extent of said dislocation corresponding at least to the width of said interlocking engagement, in each pair of contact flank faces, between the shorter one of said contact flank faces and the corresponding contact face of the respective notch in said clutch member. Thus, by rotating the secondary shaft in one direction, one contact flank face of each pair extends into interlocking engagement with the corresponding contact face of the notch, while by rotating the secondary shaft in the opposite direction the inclined face may meet the opposite face of the notch.

According to a preferred embodiment of the invention the disengaging displacement is performed only to such an extent that of the unequal flanks of the clutch teeth, which in their peripheral cross sections preferably have the form of orthogonal trapeziums with unequal sides having flanks which are at least approximately parallel with the axis, only the shorter one of said flanks is disconnected from the engagement capable of transmitting power in one direction of rotation, said engagement being with the corresponding flank of a notch in said first clutch member or in a counter piece, while the second flank of said tooth remains still at least partly in an axial position which enables opposite direction power transmitting contact with the second flank of the same notch.

the invention relates also to a use of the clutching device according to claim 10.

In the following the invention will be described in more detail with reference to the drawings, wherein

Fig 1 shows a cross section of the hoisting machinery according to the invention, and

Fig 2 shows a cross section of a clutch disc according to one embodiment of the invention.

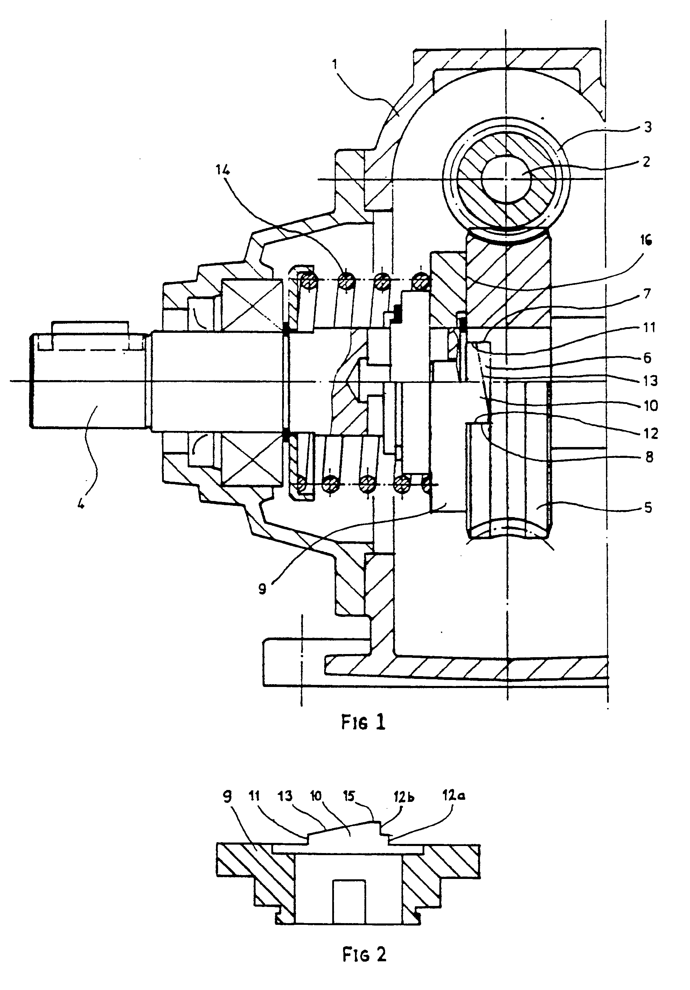

In the embodiment shown in Fig 1 there is a primary shaft 2 provided in a housing 1, said shaft having a toothed worm 3. The primary shaft 2 is rotated by a driving motor (not shown). In interlocking engagement with the toothed worm 3 there is a worm wheel acting as a clutch member 5 and freely rotating on the secondary shaft 4. The secondary shaft 4 carries the actual load such as a door or the like via not shown means. In this embodiment the worm wheel simultaneously forms one member of the clutch between the gearing and the secondary shaft 4 so that the worm wheel includes one or several notch(es) 6. Each notch 6 is provided with two active contact faces 7 and 8. The secondary shaft 4 includes as the second clutch member 9 a clutch disc provided with one or several clutch teeth 10, which extend into interlocking engagement with the notch 6. Each clutch tooth 10 comprises a pair of power transmitting contact flank faces 11 and 12, which at gearing function intermesh into load bearing or power transmitting engagement with contact faces 7 and 8, respectively of the notch 6. In this position one contact 7-11 transmits power in one direction of rotation and the other contact 8-12 transmits power in the opposite direction of rotation.

According to the invention opposing contact flank face pairs 11, 12 of each clutch tooth 10 include one contact flank face 12, having an axial extension which is longer, according to one embodiment preferably twice as long as the axial extension of the other contact flank face 11 of the same tooth. In practice this means that the front face 13 of said clutch tooth 10 is inclined, whereby the cross section of the tooth in the axial peripheral direction forms a orthogonal trapezium with unequal sides.

The clutch disc itself is mounted resistibly to torsion, e.g with the aid of a slot wedge or the like to the shaft 4 but is movable in the direction of said shaft 4. In the preferred embodiment of the invention a spring 14 presses said disc against the worm wheel so that said one or preferable several clutch teeth 10 settle into the corresponding notches 6 in the wheel. The clutch member 9 is then in such a position that both contact flank faces 7-11 and contact flank faces 8-12 can be charged with a load, whereby the motion of the secondary shaft 4 is completely determined by the motion of the primary shaft 2 and thus of the driving motor.

In order to enable the hoisting of the door in an emergency also independently of the driving motor, shafts 2 and 4 have to be disengaged. At the same time it is necessary to maintain a sufficient contact between the shafts 2 and 4 in the opposite direction of rotation so that the door cannot fall down even though the clutch were to be opened when the door is in an elevated position. Provided that a sufficient contact is maintained the self-retaining nature of the worm gear in the described embodiment, or for example separate brake members, prevent the door from falling.

Disengagement is provided by forcing said clutch disc with the aid of not shown displacement means to move out of direct contact with the clutch member 5, i.e. said worm or cog wheel. According to the invention this forcing is provided to such an extent, that one contact flank face 11 of said clutch disc is no longer in interlocking engagement with the contact face 7 of the notch 6 in said wheel. The forcing, however, cannot in normal cases extend so far that also contact flank face 12 were to move out of engagement with the surface of contact face 8. When the secondary shaft 4 thereafter is turned with the aid of not shown manually operated means in a direction opening the door, the inclined face 13 of each clutch tooth 10 will get no hold on the notch 6 in the wheel, but will only press the clutch disc even further against the spring 14, whereby the clutch tooth 10 will move to the following notch 6 of the wheel and the secondary shaft 4 can rotate correspondingly.

In case the door for some reason were to show a tendency to move downward by its own weight, which can happen for example at the moment of disengagement or in case the grip at the manually operated means does not hold, each contact flank face 12 is still in engagement with the contact face 8 of the notch 6 due to the action of the spring 14 and in spite of the clutch disc displacement means. Thus the movement of the secondary shaft 4 and thus of the door in the downward direction is prevented. Thus as a result of the unequally long tooth flanks the solution according to the invention in disengaged mode functions as a clutch which in one direction of rotation is freely moving and in the other direction of rotation is immobile, while in the engaged mode the clutch is completely immobile.

According to another embodiment shown in Fig 2 the axially longer extending contact flank face 12 of said clutch disc is divided into portions 12a and 12b which are staggered in the direction of the periphery, wherefore the peripheral dimension of the clutch tooth 10 changes in the direction of the shaft 4. The width of said tooth measured from contact flank face 11 to contact flank face portion 12a preferably corresponds approximately to the width of the notch 6 in the wheel at said point, but the width of said tooth in the direction of the shaft 4 towards the wheel as measured from the contact flank face 11 to the contact flank face portion 12b is slightly smaller than the width of the notch 6. Thus said tooth fits into the notch 6 slightly more loosely when said clutch disc is displaced into disengaging position from the wheel in the direction of the shaft 4. This solution has the advantage that it facilitates the settling of the clutch tooth 10 into the notch 6 in a situation when the shaft 4 together with its clutch disc due to a sudden charge tends to rotate quickly while the wheel functioning as a counter piece remains still in its original position. The extension of the contact flank face portion 12b in the axial direction corresponds preferably to the corresponding extension of the inclined face 13.

The peripheral dimension between the contact faces 7, 8 of the notch 6 or the like in the counter piece is preferably essentially the same as, or greater by the amount of the tolerance than the corresponding dimension between the contact flank faces 11 and 12 and said portion 12a respectively of the clutch disc and materially greater than the dimension between the contact flank face 11 and the eventual second contact flank face portion 12b.

In the embodiment shown in Fig 2 the outer part of the inclined face 13 of the clutch tooth 10 on the clutch disc includes a beveled outermost portion 15, the surface of which essentially forms the mirror image of the rotation face surface 16 of said worm or cog wheel, which rotation surface is directed towards the clutch member 9. The object of such a bevelling is to prevent the sharp edge of the clutch tooth 10 from digging into the worm wheel functioning as a counter piece and preferably being made of bronze.

Within the scope of the invention it is also possible to construe the displacement means of said clutch disc in such a way that with special measures the clutch can be completely disengaged for example for maintenance or the like purposes.

In the foregoing there has been exemplified embodiments wherein said clutch teeth 10 are situated in the clutch disc and the notch 6 in the wheel but the arrangement can naturally be the opposite. Likewise the clutch according to the invention can be adapted in connection with another type of gearing solution, the full benefit of the invention still requiring that the rotation of the gear from the secondary shaft is not possible or at least causes great resistance.

In the foregoing there has been described principally embodiments wherein said clutch teeth 10 have a more or less clearly defined radial reach in the lateral direction with respect to the secondary shaft 4, said reach defining the contact flank faces 11 and 12. The scope of the invention, however, covers also embodiments wherein said teeth are formed as inclined cut round tenons. According to another embodiment of the invention the contact faces of said clutch teeth 10 and the contact faces 7, 8 and contact flank faces 11, 12 respectively of the notch 6 in the wheel are paired parallel surfaces. The production of such clutch teeth 10 and notches 6 is production technically advantageous

## Claims

1. Clutching device for a hoisting machinery for doors or the like, said machinery having a primary shaft (2) connected via a gearing to a driving motor and a secondary shaft (4) carrying a hoisting means, said clutching device including coupling means between said secondary shaft (4) and said gearing for disengaging said secondary shaft (4) suitably for manual operation, said coupling means comprising first and second axially mutually movable clutch members (5, 9), said second clutch member (9) being movable in the direction of the secondary shaft (4) against the force of a spring load, comprising at least one pair of opposite contact flank faces (11, 12) acting essentially perpendicularly to the shaft radius, said clutch members (5, 9) being normally forced by said spring load into mutually axial disposition with each pair of opposite contact flank faces (11, 12) of said second clutch member (9) extending, respectively, into an interlocking engagement with corresponding pairs of opposite contact faces (7, 8) of respective notches (6) in said first clutch member (5), thus transmitting power in both directions of rotation, **characterized** by said opposite contact flank faces (11, 12), being part of a clutch tooth (10), having, in each pair respectively, different extensions in the direction of said shaft (4), and are thereby joined by an inclined face (13), said device further comprising displacement means for temporarily dislocating said mutually axial disposition in the direction of said shaft (4) and against the force of said spring load, the extent of said dislocation corresponding at least to the width of said interlocking engagement, in each pair of contact flank faces (11, 12), between the shorter one (11) of said contact flank faces and the corresponding contact face (7) of the respective notch (6) in said clutch member (5), such that, by rotating the secondary shaft (4) in one direction, one contact flank face (12) of each pair (11, 12) extends into interlocking engagement with the corresponding contact face (8) of the notch (6), while by rotating the secondary shaft (4) in the opposite direction the inclined face (13) meets the opposite face (7) of the notch (6).

2. A clutching device according to claim 1, **characterized** in, that said coupling means comprise a clutch disc axially movable on said secondary shaft (4) and spring biased against a gear wheel, said clutch disc comprising clutch teeth (10) extending into notches (6) in the side of said gear wheel, said teeth (10) comprising contact flanks faces (11, 12, 12a, 12b) extending essentially in the direction of said shaft (4) and having, in the direction of said shaft (4), different flank depths.

3. A clutching device according to claim 2, **characterized** in, that the cross section of the clutch teeth (10) in the peripheral direction of said shaft (4) forms at least approximately an orthogonal trapezium with unequal sides.

4. A clutching device according to claim 2, **characterized** in, that of the contact flank faces (11, 12) of each clutch tooth (10) that one (12), which is longer in the direction of said shaft (4), is staggered to constitute in the direction of said shaft (4) at least two successive flank portions (12a) and (12b), at least one latter one (12b) of said flank portions being located towards said gear wheel, the peripheral face width of the tooth (10), as measured from the plane of the flank contact flank face (11) to said first flank portion (12a), thus being greater than the corresponding width as measured to said latter flank portion (12b).

5. A clutching device according to claim 4, **characterized** in, that the dimension of said latter contact flank portion (12b) in axial direction corresponds to the corresponding dimension of said inclined face (13).

6. A clutching device according to any of claims 1...5, **characterized** in, that the outermost portion (15) of the inclined face (13) of each clutch tooth (10) is beveled preferably to correspond to that face surface (16) of said gear wheel, which surface is directed towards said clutch disc.

7. A clutching device according to any of claims 1...6, **characterized** in, that the peripheral dimension between said contact faces (7, 8) of said notch (6) or the like in said clutch member (5) is essentially the same or greater by the amount of the tolerance than the corresponding dimension of said contact flank faces (11, 12, 12a) of the clutch disc and materially greater than the dimension between the contact flank face (11) and the eventual second contact flank portion (12b).

8. Method for the controlling of the movement of the secondary shaft (4) of a hoisting machinery or the like, wherein for the manual or the like operation the secondary shaft (4) with the aid of the clutching device according to one of the preceding claims, which is preferably movable in the direction of said secondary shaft (4), is disengaged from the driving motor in such a way that the second clutch member (9) or a clutch disc mounted torsion resistibly on said secondary shaft (4) is moved in the direction of said shaft (4), the disconnecting displacement is performed only to the extent that out of the unequal contact -flank faces (11, 12, 12a, 12b) joined by the inclined face (13) of clutch teeth (10), said flanks being at least approximately parallel with the shaft (4), only the shorter one (11) is disconnected from an engagement capable of transmitting power in one direction of rotation, said engagement being with a corresponding flank of a notch (6) in the first clutch member (5) or counter piece, while the second contact flank (12, 12a, 12b) of said tooth (10) remains still at least partly in an axial position enabling opposite direction power transmitting contact with the second flank of the same notch (6).

9. Method according to claim 8, **characterized** in; that said clutch disc is displaced against the force of a spring (14) in the direction of the shaft (4) to such an extent, that the contact flank faces (11, 12, 12a) of said clutch disc, which flanks create a close clutching contact, in the direction of said shaft (4), extend at the most only to that face surface (16) of said counter piece, which surface is directed towards said clutch members (9), in such a way, that during the mutual rotation of said clutch disc and said counter piece one (7) of the opposing contact flanks (7, 8) of said notch (6) in said counter piece may contact only a front face (13) which is inclined in the peripheral direction of said clutch tooth (10), while the other contact flank (8), still power transmitting, during a rotation in the opposite direction contact will meet the longer flank (12) of said tooth (10) or preferably the outermost portion (12b) of said flank (12), said portion being staggered towards said inclined face (13) of said tooth (10).

10. The use of the clutching device according to one of the claims 1 to 7 in connection with hoisting machineries for the disengagement of the driving motor from the hoisting means.

**Ansprüche**

1. Kupplungsvorrichtung für einen Hebe-Mechanismus einer Tür, eines Tores od. dgl., welcher eine über ein Getriebe mit einem Antriebsmotor verbundene Primärwelle (2) und eine ein Hebeelement tragende Sekundärwelle (4) hat, wobei die Kupplungsvorrichtung Kupplungselemente zwischen der Sekundärwelle (4) und dem Getriebe aufweist zum Auskuppeln der Sekundärwelle (4) zweckmäßigerweise für eine manuelle Bedienung, die aus einem ersten und zweiten, axial gegenseitig bewegbaren Kupplungsteil (5, 9) bestehen, wobei das zweite Kupplungsteil (9) in Richtung auf die Sekundärwelle (4) gegen die Kraft einer Federbelastung bewegbar ist und wenigstens ein Paar im wesentlichen senkrecht zum Wellenradius wirksame, gegenüberliegende Kontaktflanken-Flächen (11, 12) aufweist, wobei die Kupplungsteile (5, 9) normalerweise durch die Federbelastung in gegenseitige axiale Anordnung gezwungen werden und jeweils jedes Paar gegenüberliegender Kontaktflanken-Flächen (11, 12) des zweiten Kupplungsteiles (9) mit einem entsprechenden Paar gegenüberliegenden Kontaktflächen (7, 8) von jeweiligen Ausnehmungen (6) des ersten Kupplungsteiles (5) in Eingriff steht und dadurch Kraft in beiden Drehrichtungen überträgt, dadurch gekennzeichnet, daß die gegenüberliegenden Kontaktflanken-Flächen (11, 12) Teil eines Kupplungszahnes (10) sind und in jeweils einem Paar unterschiedlichen Ausdehnungen in Richtung auf die Welle (4) haben und durch eine geneigte Fläche (13) verbunden sind, wobei die Vorrichtung ferner Verschiebemittel hat zum zeitweisen Verlagerung der gegenseitigen axialen Anordnung in Richtung auf die Welle (4) und gegen die Kraft der Federbelastung, wobei das Ausmaß der Verlagerung wenigstens der Weite des Eingriffes von jeweils einem Paar der Kontaktflanken-Flächen (11, 12) zwischen der kürzeren (11) davon und der entsprechenden Kontaktfläche (7) der jeweiligen Ausnehmung (6) im Kupplungsteil (5) entspricht, derart daß durch Drehung der Sekundärwelle (4) in eine Richtung eine Kontaktflanken-Fläche (12) jedes Paares (11, 12) sich im Verriegelungseingriff mit der entsprechenden Kontaktfläche (8) der Ausnehmung (6) befindet, während durch Drehung der Sekundärwelle (4) in Gegenrichtung die geneigte Fläche (13) auf die gegenüberliegende Fläche (7) der Ausnehmung (6) trifft.

2. Kupplungsvorrichtung nach Anspruch 1, dadurch gekennzeichnet, daß die Kupplungselemente eine axial auf der Sekundärwelle (4) bewegbare und gegen ein Getrieberad federdruckbeaufschlagte Kupplungsscheibe aufweisen, wobei die Kupplungsscheibe Kupplungszähne (10) besitzt, die in seitlich im Getrieberad befindliche Ausnehmungen (6) eingreifen und sich im wesentlichen in Richtung auf die Welle (4) erstreckende Kontaktflanken-Flächen (11, 12, 12a, 12b) aufweisen mit, in Richtung auf die Welle (4), unterschiedlichen FlankenTiefen.

3. Kupplungsvorrichtung nach Anspruch 2, dadurch gekennzeichnet, daß der Querschnitt der Kupplungszähne (10) in Umfangsrichtung der Welle (4) wenigstens annähernd ein orthogonales Trapez mit ungleichen Seiten bildet.

4. Kupplungsvorrichtung nach Anspruch 2, dadurch gekennzeichnet, daß die in Richtung auf die Welle (4) längere (12) der Kontaktflanken-Flächen (11, 12) jedes Kupplungszahnes (10) abgesetzt ist um in Richtung auf die Welle (4) wenigstens zwei aufeinander-folgende Flankenabschnitte (12a) und (12b) zu bilden, wobei wenigstens der letztere (12b) der Flankenabschnitte zum Getrieberad gerichtet ist und die in Umfangsrichtung gemessene Flächenbreite des Zahnes (10), gemessen von der geraden Seite der Kontaktflanken-Fläche (11) zum ersten Flankenabschnitt (12a) größer ist als die entsprechende, zum letzteren Flankenabschnitt (12b) gemessene Breite.

5. Kupplungsvorrichtung nach Anspruch 4, dadurch gekennzeichnet, daß die Abmessung des letzteren Kontakt-flankenabschnittes (12b) in axialer Richtung mit der entsprechenden Abmessung der geneigten Fläche (13) übereinstimmt.

6. Kupplungsvorrichtung nach einem der Ansprüche 1 bis 5, dadurch gekennzeichnet, daß der äußerste Abschnitt (15) der geneigten Fläche (13) jedes Kupplungszahnes (10) so abgekantet ist, daß er vorzugsweise der Seitenflächen-Oberfläche (16) des Getrieberades entspricht, wobei die Seitenflächen-Oberfläche zur Kupplungsscheibe gerichtet ist.

7. Kupplungsvorrichtung nach einem der Ansprüche 1 bis 6, dadurch gekennzeichnet, daß die in Umfangsrichtung gemessene Abmessung zwischen den Kontaktflächen (7, 8) der Ausnehemung (6) od. dgl. im Kupplungsteil (5) annähernd die gleiche oder durch das Toleranzmaß größer ist als die entsprechende Abmessung der Kontaktflanken-Flächen (11, 12, 12a) der Kupplungsscheibe und im wesentlichen größer als die Abmessung zwischen der Kontaktflanken-Fläche (11) und ggfs. dem zweiten Kontaktflanken-Abschnitt (12b).

8. Verfahren zum Steuern der Bewegung der Sekundärwelle (4) eines Hebe-Mechanismus od. dgl., worin für eine manuelle od. dgl. Bedienung die Sekundärwelle (4) mit Hilfe der oben beanspruchten vorzugsweise in Richtung der Sekundärwelle (4) bewegbaren Kupplungsvorrichtung vom Antriebsmotor in der Weise ausgekuppelt wird, daß das zweite Kupplungsteil (9) oder eine auf der Sekundärwelle (4) drehfest gelagerte Kupplungsscheibe in Richtung der Welle (4) bewegt wird, wobei die Auskupplungs-Verschiebung nur in dem Umfang ausgeführt wird, daß von den wenigstens annähernd parallel zur Welle (4) verlaufenden durch die geneigte Fläche (13) verbundenen ungleichen Kontaktflanken-Flächen (11, 12, 12a, 12b) der Kupplungszähne (10) nur die kürzere (11) aus einem in einer Drehrichtung kraftübertragenden Eingriff mit einer entsprechenden Flanke einer Ausnehmung (6) im ersten Kupplungsteil (5) oder Gegenstück ausgekuppelt wird, während die zweite Kontaktflanke (12, 12a, 12b) des Zahnes (10) wenigstens teilweise noch in einer axialen Position bleibt, die einen in die entgegengesetzte Richtung Kraftübertragenden Kontakt mit der zweiten Flanke derselben Ausnehmung (6) erlaubt.

9. Verfahren nach Anspruch 8, dadurch gekennzeichnet, daß die Kupplungsscheibe gegen die Kraft einer Feder (14) in Richtung auf die Welle (4) in einem solchen Ausmaß verschoben wird, daß die Kontaktflanken-Flächen (11, 12, 12a) der Kupplungsscheibe, welche einen schlüssigen Kupplungskontakt bilden, in Richtung zur Welle (4) höchstens nur bis zur Oberfläche (16) des Gegenstücks reichen, wobei die Oberfläche in einer Weise gegen die Kupplungsteile (9) ausgerichtet ist, daß während der gegenseitigen Drehung von der Kupplungsscheibe und dem Gegenstück eine (7) der gegenüberliegenden Kontahtflanken (7, 8) der Ausnehmung (6) im Gegenstück nur eine Frontfläche (13) berühren kann, welche in Umfangsrichtung des Kupplungszahnes (10) geneigt ist, während die andere Kontaktflanke (8) noch Kraftübertragend ist und bei einer Drehung in die entgegengesetzte Richtung auf die längere Flanke (12) des Zahnes (10) trifft oder vorzugsweise auf den äußersten Abschnitt (12b) dieser Flanke (12), welcher zu der geneigten Fläche (13) des Zahnes (10) zurückversetzt ist.

10. Verwendung der Kupplungsvorrichtung nach einem der Ansprüche 1 bis 7 in Verbindung mit Hebe-Mechanismen für das Auskuppeln des Antriebsmotors von den Hebeelementen.

## Revendications

1. Dispositif d'embrayage pour un mécanisme de levage de portes ou similaires, ledit mécanisme comprenant un arbre primaire (2) relié par l'intermédiaire d'un engrenage à un moteur d'entraînement et un arbre secondaire (4) portant un moyen de levage, ledit dispositif d'embrayage comprenant des moyens d'accouplement entre ledit arbre secondaire (4) et ledit engrenage pour désaccoupler ledit arbre secondaire (4) de manière appropriée en vue d'un fonctionnement annuel, lesdits moyens d'accouplement comprenant un premier et un second organe d'embrayage (5, 9) pouvant être déplacés axialement l'un par rapport à l'autre, ledit second organe d'embrayage (9) pouvant être déplacé dans la direction de l'arbre secondaire (4) à l'encontre de la force d'une charge élastique, et comprenant au moins une paire de faces latérales de contact opposées (11, 12) agissant pour l'essentiel perpendiculairement au rayon de l'arbre, cependant que lesdits organes d'embrayage (5, 9) sont normalement forcés par ladite charge élastique en une disposition axiale mutuelle dans laquelle chaque paire de faces latérales de contact opposées (11, 12) dudit second organe d'embrayage (9) s'étend respectivement en prise par interpénétration avec des paires correspondantes de faces de contact opposées (7, 8) de crans respectifs (6) ménagés dans ledit premier organe d'embrayage (5) en transmettant ainsi la puissance dans les deux sens de rotation, caractérisé par le fait que lesdites faces latérales de contact opposées (11, 12) font partie d'une dent d'embrayage (10) et qu'elles présentent, pour chaque paire respectivement, des étendues différentes dans la direction dudit arbre (4) en étant ainsi réunies par une face inclinée (13), cependant que ledit dispositif comprend en outre des moyens de déplacement pour modifier temporairement ladite disposition axiale mutuelle par deplacement dans la direction dudit arbre (4) et à l'encontre de la force de ladite charge élastique, l'étendue dudit déplacement correspondant au moins à la largeur de ladite prise par interpénétration, dans chaque paire de faces latérales de contact (11, 12), entre la plus courte (11) desdites faces latérales de contact opposées et la face de contact correspondante (7) du cran respectif (6) ménagé dans ledit organe d'embrayage (5), de telle sorte qu'en faisant tourner l'arbre secondaire (4) dans un sens, une face latérale de contact (12) de chaque paire (11, 12) s'étend en prise par interpénétration avec la face de contact correspondante (8) du cran (6), tandis qu'en faisant tourner l'arbre secondaire (4) dans le sens opposé, la face inclinée (13) rencontre la face opposée (7) du cran (6).

2. Dispositif d'embrayage selon la revendication 1, caractérisé par le fait que lesdits moyens d'accouplement comprennent un disque d'embrayage qui peut être déplacé axialement sur ledit arbre secondaire (4) et qui est poussé élastiquement contre une roue d'engrenage, ledit disque d'embrayage comprenant des dents d'embrayage (10) qui s'étendent dans des crans (6) ménagés dans le côté de ladite roue d'engrenage, et lesdites dents (10) comprenant des faces latérales de contact (11, 12, 12a, 12b) qui s'étendent, pour l'essentiel, dans la direction dudit arbre (4) et qui présentent des flancs dont la profondeur dans la direction dudit arbre (4) est différente.

3. Dispositif d'embrayage selon la revendication 2, caractérisé par le fait que la section transversale des dents d'embrayage (10), prise dans la direction périphérique dudit arbre (4), forme, du moins approximativement, un trapèze rectangle à côtés inégaux.

4. Dispositif d'embrayage selon la revendication 2, caractérisé par le fait que, parmi les faces latérales de contact (11, 12) de chaque dent d'embrayage (10), celle (12) qui est la plus longue dans la direction dudit arbre (4) est étagée pour constituer, dans la direction dudit arbre (4), au moins deux parties de flancs successives (12a et 12b), au moins une dernière (12b) desdites parties de flancs étant située du côté de ladite roue d'engrenage, la largeur périphérique de la face de la dent (10), telle qu'elle est mesurée depuis le plan de la face latérale de contact (11) jusqu'à ladite première partie de flanc (12a), étant ainsi supérieure à la largeur correspondante telle qu'elle est mesurée jusqu'à ladite dernière partie de flanc (12b).

5. Dispositif d'embrayage selon la revendication 4, caractérisé par le fait que la dimension de ladite dernière partie de flanc de contact (12b) dans la direction axiale correspond à la dimension correspondante de ladite face inclinée (13).

6. Dispositif d'embrayage selon l'une quelconque des revendications 1 à 5, caractérisé par le fait que la partie (15) de la face inclinée (13) de chaque dent d'embrayage (10) qui est le plus à l'extérieur est chanfreinée de façon à correspondre de préférence à la surface de la face (16) de ladite roue d'engrenage qui est dirigée vers ledit disque d'embrayage.

7. Dispositif d'embrayage selon l'une quelconque des revendications 1 à 6, caractérisé par le fait que la distance périphérique entre lesdites faces de contact (7, 8) dudit cran (6) ou similaire ménagé dans ledit organe d'embrayage (5) est sensiblement la même que la distance correspondante entre lesdites faces latérales de contact (11, 12, 12a) du disque d'embrayage, ou supérieure à celle-ci de la valeur de la tolérance, et sensiblement plus grande que la distance entre la face latérale de contact (11) et l'éventuelle seconde partie (12b) du flanc de contact.

8. Procédé pour contrôler le mouvement de l'arbre secondaire (4) d'un mécanisme de levage ou similaire, dans lequel, pour le fonctionnement manuel ou similaire, l'arbre secondaire (4), à l'aide du dispositif d'embrayage selon l'une des revendications précédentes qui peut être de préférence déplacé dans la direction dudit arbre secondaire (4), est désaccouplé du moteur d'entraînement de telle manière que le second organe d'embrayage (9), ou un disque d'embrayage monté sur ledit arbre secondaire (4) de façon à résister à la torsion, est déplacé dans la direction dudit arbre (4), et dans lequel le déplacement de désaccouplement est réalisé seulement sur une distance telle que, parmi les faces latérales de contact inégales (11, 12, 12a, 12b) réunies par la face inclinée (13) de dents d'embrayage (10), lesdits flancs étant au moins approximativement parallèles à l'arbre (4), seule la plus courte (11) est dégagée d'une prise susceptible de transmettre la puissance dans un sens de rotation, ladite prise ayant lieu avec un flanc correspondant d'un cran (6) ménagé dans le premier organe d'embrayage (5) ou contre-pièce, tandis que le second flanc de contact (12, 12a, 12b) de ladite dent (10) reste encore, du moins partiellement, en une position axiale permettant un contact avec le second flanc du même cran (6) qui transmet la puissance en sens opposé.

9. Procédé selon la revendication 8, caractérisé par le fait que ledit disque d'embrayage est déplacé à l'encontre de la force d'un ressort (14) dans la direction de l'arbre (4) d'une distance telle que les faces latérales de contact (11, 12, 12a) dudit disque d'embrayage, flancs qui créent un contact d'embrayage étroit, s'étendent au plus dans la direction dudit arbre (4) jusqu'à la surface (16) de la face de ladite contre-pièce qui est dirigée vers lesdits organes d'embrayage (9), de telle manière que, pendant la rotation l'un par rapport à l'autre dudit disque d'embrayage et de ladite contre-pièce, l'un (7) des flancs de contact opposés (7, 8) dudit cran (6) ménagé dans ladite contre-pièce ne puisse venir en contact qu'avec une face antérieure (13) qui est inclinée dans la direction de la périphérie de ladite dent d'embrayage (10), tandis que l'autre flanc de contact (8), lequel transmet encore de la puissance, rencontre pendant une rotation dans le sens opposé le flanc le plus long (12) de ladite dent (10) ou, de préférence, la partie (12b) dudit flanc (12) qui est la plus à l'extérieur, ladite partie étant étagée vers ladite face inclinée (13) de ladite dent (10).

10. Utilisation du dispositif d'embrayage selon l'une des revendications 1 à 7 en liaison avec des mécanismes de levage pour désaccoupler le moteur d'entraînement des moyens de levage.

FIG 1

FIG 2